# EUROPEAN PATENT APPLICATION

(11) **EP 4 578 760 A1**
(43) Date of publication of application: **02.07.2025**
(21) Application number: 23902396.3
(22) Date of filing: 16.11.2023
(51) Int. Cl.: B61L 27/00, B61L 23/00

(54) **TRAIN COLLISION PREVENTION METHOD AND DEVICE BASED ON TRAIN-TO-TRAIN COMMUNICATION, AND STORAGE MEDIUM**

(30) Priority: 13.12.2022 CN 202211600858
(71) Applicant: Casco Signal Ltd., Shanghai 200435 (CN)
(72) Inventor: ZHI, Wenchao, Shanghai 200435 (CN); LV, Xinjun, Shanghai 200435 (CN); LIU, Jianbang, Shanghai 200435 (CN); JIANG, Yifei, Shanghai 200435 (CN); XU, Zhengyuan, Shanghai 200435 (CN); CHEN, Taotao, Shanghai 200435 (CN); ZHANG, Lu, Shanghai 200435 (CN); LI, Hanze, Shanghai 200435 (CN)
(74) Representative: Winter, Brandl - Partnerschaft mbB
(86) International application number: PCT/CN2023/131920
(87) International publication number: WO 2024/125196

(57) **Abstract**

The present invention relates to a train anti-collision method based on vehicle-to-vehicle communication, a device, and a storage medium. The method includes the following steps: step A: initiating, by a trackside resource controller, vehicle-to-vehicle communication based on requirements for track resource overlapping and anti-deadlock requested by different train controllers, and establishing direct vehicle-to-vehicle communication between the different train controllers; step B: directly negotiating track resources between different trains; and step C: revoking, by the trackside resource controller, the vehicle-to-vehicle communication based on a current train running state and a signal system running state, and performing request and release of the track resources between the train controller and the trackside resource controller. Compared with the prior art, the present invention has advantages of improving the utilization efficiency of track and train resources while ensuring safety.

## Description

### TCHNICAL FIELD

The present invention relates to a train signal control system, and in particular to a train anti-collision method based on vehicle-to-vehicle communication, a device, and a storage medium.

### BACKGROUND

Based on CBTC, a train control system can implement track resource management and train interval protection through interlocking CI and a zone controller (ZC). However, to prevent the occurrence of head-on collision and rear-end collision, request and release of a track resource are performed between a train controller and a trackside controller. After a front train releases a track resource to the trackside controller, the trackside controller can hand over the track resource to a rear train. Consequently, the transfer of the resource to the trackside controller is increased. Reaction time of the system is increased, and the efficiency of the system is reduced.

### SUMMARY

The present invention provides a train anti-collision method based on vehicle-to-vehicle communication, a device, and a storage medium to overcome the defects in the prior art.

The purpose of the present invention can be realized by the following technical solutions:
According to a first aspect of the present invention, a train anti-collision method based on vehicle-to-vehicle communication is provided. The method includes the following steps:
step A: initiating, by a trackside resource controller, vehicle-to-vehicle communication based on requirements for track resource overlapping and anti-deadlock requested by different train controllers, and establishing direct vehicle-to-vehicle communication between the different train controllers;
step B: directly negotiating track resources between different trains; and
step C: revoking, by the trackside resource controller, the vehicle-to-vehicle communication based on a current train running state and a signal system running state, and performing request and release of the track resources between the train controller and the trackside resource controller.

In a preferred technical solution, in step A, the train controller requests a track resource Z from the trackside resource controller, the trackside resource controller allocates the track resource Z to the train controller, and the train controller allows a train to run only within the requested track resource Z; and the trackside resource controller allocates, to the train controller, an area Z that does not overlap with another train controller.

**In** a preferred technical solution, in step A, when the trackside resource controller learns that a track resource Z.A requested by a train controller A partially overlaps with a track resource Z.B requested by a train controller B, the trackside resource controller respectively requests a control token X and a control token U to the train controller A and the train controller B simultaneously.

In a preferred technical solution, when the train controller A receives a request for a token U(A,B) from the trackside resource controller, the train controller A hands over the token U(A,B) to the trackside resource controller; and
when the train controller B receives a request for a token U(B,A) from the trackside resource controller, the train controller B hands over the token U(B,A) to the trackside resource controller.

In a preferred technical solution, when the trackside resource controller receives the control token U(A,B) from the train controller A, the trackside resource controller hands over a control token V(A,B) to the train controller B; and when the train controller B owns the control token V(A,B), the train controller B trusts a promise made to the train controller B by the train controller A.

In a preferred technical solution, when the trackside resource controller receives the control token U(B,A) from the train controller B, the trackside resource controller hands over a control token V(B,A) to the train controller A; and when the train controller A owns the control token V(B,A), the train controller A trusts a promise made to the train controller A by the train controller B.

In a preferred technical solution, in step A, the train controller A requests, from the train controller B, a range Remote.Y.B within which the train B does not reach; after the train controller B calculates a track resource range Self.Y.B required by itself based on self running needs, the train controller B authorizes a supplementary set of Self.Y.B to the train controller A;

the train controller B requests, from the train controller A, a range Remote.Y.A within which the train A does not reach; and after the train controller A calculates a track resource range Self.Y.A required by itself based on self running needs, the train controller A authorizes a supplementary set of Self.Y.A to the train controller B.

In a preferred technical solution, after the train controller A and the train controller B separately receive a range within which the other party does not appear, the train controller A hands over the control token X(A,B) to the trackside resource controller, and the train controller B hands over the control token X(B,A) to the trackside resource controller.

In a preferred technical solution, in step B, the trackside resource controller allocates an overlapped area Z to the two train controllers after obtaining the token X(A,B) of the train controller A and the token X(B,A) of the train controller B, in this case, the trackside resource controller authorizes the train A to run in a track resource area Z.A, the trackside resource controller authorizes the train B to run in a track source area Z.B, and the track resource area Z.A and the track resource area Z.B have intersection.

In a preferred technical solution, in step B, a collision risk between the train A and the train B is prevented by the train controller A and the train controller B, and a collision risk between a remaining train and the train A or the train B is still prevented by the trackside resource controller.

In a preferred technical solution, in step B, the train runs within an authorized range Z.A of the trackside resource controller, and needs to run within an authorized range Remote.Y.B of the train controller B and a range Self.Y.A promised to another train controller; and
when the train A runs within the range Z.A authorized by the trackside resource controller, if the range is beyond the authorized range Remote.Y.B of the train controller B, the train controller A needs to request a new authorized range from the train controller B.

In a preferred technical solution, in step B, the train controller B receives a track resource request from the train controller A, the train controller B determines, based on self running needs, whether to authorize a range requested by the train controller A, and the train controller B sends the range that can be authorized to the train controller A to the train controller A; and
a train can run within a running range newly authorized by the train controller B only after the train controller A receives the running range.

In a preferred technical solution, in step B, if the train controller A expects to run to an area in which the train controller A promised the train controller B not to run, namely, Self Y. A does not include the area, the train controller A needs to reclaim the promised area from the train controller B; and
after the train controller B receives the request from the train controller A, the train controller B determines whether the area can be returned to the train controller A, and the train controller B returns a range that can be returned to the train controller A to the train controller A, and the train controller A allows the train to run in the area only after the train controller A determines that Self Y. A includes the area, otherwise the train controller A prohibits the train A from appearing in the area.

In a preferred technical solution, in step C, when the trackside resource controller learned that there is no intersection between the track resource Z.A authorized to the train A and the track resource Z.B authorized to the train B, the trackside resource controller returns a token X(A,B) to the train controller A and returns a token X(B,A) to the train controller B, and after the trackside resource controller loses the control token X(A,B) or the control token X(B,A), the trackside resource controller no longer allocates, to the train controller A and the train controller B, a track resource Z.A and a track resource Z.B between which there is an intersection respectively.

In a preferred technical solution, in step C, the trackside resource controller requests the train controller A to return the control token V(B,A); and the trackside resource controller requests the train controller B to return the control token V(A,B).

In a preferred technical solution, in step C, the train controller A returns a control token V(B,A) to the trackside resource controller, and after the trackside resource controller receives the returned control token V(B,A), the trackside resource controller returns the control token U(B,A) to the train controller B; and
the train controller B returns a control token V(A,B) to the trackside resource controller, and after the trackside resource controller receives the returned control token V(A,B), the trackside resource controller returns the control token U(A,B) to the train controller A.

According to a second aspect of the present invention, an electronic device is provided, including a processor and a memory on which a computer program is stored, where when the processor executes the program, the above method is implemented.

According to a third aspect of the present invention, a computer-readable storage medium is provided, on which a computer program is stored, where when the program is executed by a processor, the above method is implemented.

Compared with the prior art, in the present invention, the vehicle-to-vehicle communication is directly performed between train controllers that share track resources, and the track resources are used through negotiation, to resolve the problem of train collision, preventing track resource transfer of the trackside resource controller, and improving use efficiency of resources such as tracks and trains.

### BRIEF DESCRIPTION OF THE DRAWINGS

FIG. 1 is a schematic diagram showing that track resources respectively requested by two train controllers are overlapped;
FIG. 2 is a schematic diagram showing that a trackside resource controller triggers vehicle-to-vehicle communication;
FIG. 3 is a schematic diagram showing that the trackside resource controller authorizes a token V to the other party after receiving a token U;
FIG. 4 is a schematic diagram showing that vehicle-to-vehicle communication is established, and the trackside resource controller allocates overlapped trackside sources;
FIG. 5 is a schematic diagram showing that vehicle-to-vehicle communication is established, and the use of a track resource is requested between train controllers;
FIG. 6 is a schematic diagram showing that vehicle-to-vehicle communication is established, and the use of a track resource is requested between train controllers;
FIG. 7 is a schematic diagram showing that there is no intersection between track resources, and a trackside resource controller revokes vehicle-to-vehicle communication;
FIG. 8 is a schematic diagram showing that there is no intersection between track resources, and a trackside resource controller returns a control token U; and
FIG. 9 is a flow chart of a method according to the present invention.

### DESCRIPTION OF THE EMBODIMENTS

The following is a clear and complete description of technical schemes in embodiments of the present invention in combination with drawings attached to the embodiments of the present invention. Obviously, the embodiments described are a part of the embodiments of the present invention, but not the whole embodiments. Based on the embodiments in the present invention, all other embodiments obtained by those of ordinary skill in the art without creative labor shall fall within the scope of protection of the present invention.

The present invention provides a train anti-collision method based on vehicle-to-vehicle communication, and the system includes a trackside resource controller and a train controller. The trackside resource controller is responsible for the distribution of track resources, that is, a train needs to obtain a track resource from the trackside resource controller; and the train controller is configured to control the train.

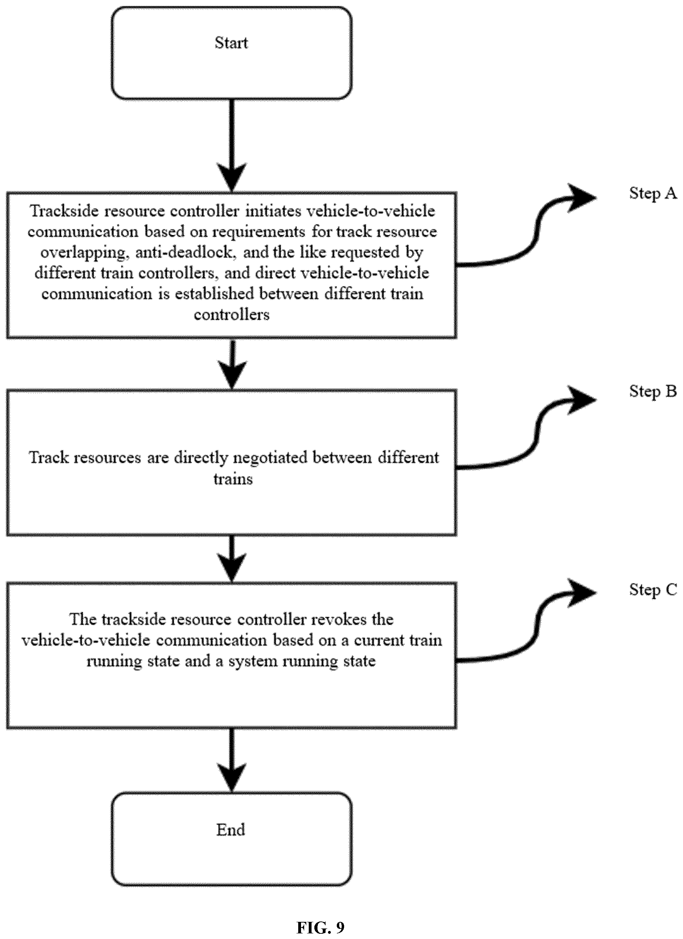

As shown in FIG. 9, a train anti-collision method based on vehicle-to-vehicle communication includes the following steps:
step A: a trackside resource controller initiates vehicle-to-vehicle communication based on requirements for track resource overlapping, anti-deadlock, and the like requested by different train controllers, and direct vehicle-to-vehicle communication is established between the different train controllers;
step B: track resources are directly negotiated between different trains; and
step C: the trackside resource controller revokes the vehicle-to-vehicle communication based on a current train running state, a system running state, and the like, and request and release of the track resources are performed between the train controller and the trackside resource controller, and no longer directly negotiated between vehicles.

In step A, the train controller requests a track resource Z from the trackside resource controller, the trackside resource controller allocates the track resource Z to the train controller, and the train controller allows a train to run only within the requested track resource Z. To prevent head-on collision and rear-end collision between different trains, the trackside resource controller allocates, to the train controller, an area Z that does not overlap with another train controller.

In step A, when the trackside resource controller learns that a track resource Z.A requested by the train controller A partially overlaps with a track resource Z.B requested by a train controller B, the trackside resource controller respectively requests control tokens X and control tokens U to the train controller A and the train controller B simultaneously.

In step A, when the train controller A receives a request for a token U(A,B) from the trackside resource controller, the train controller A hands over the token U(A,B) to the trackside resource controller.

In step A, when the train controller B receives a request for a token U(B,A) from the trackside resource controller, the train controller B hands over the token U(B,A) to the trackside resource controller.

In step A, when the trackside resource controller receives the control token U(A,B) from the train controller A, the trackside resource controller hands over a control token V(A,B) to the train controller B. When the train controller B owns the control token V(A,B), the train controller B can trust a promise made to the train controller B by the train controller A.

In step A, when the trackside resource controller receives the control token U(B,A) from the train controller B, the trackside resource controller hands over a control token V(B,A) to the train controller A. When the train controller A owns the control token V(B,A), the train controller A can trust a promise made to the train controller A by the train controller B.

In step A, the train controller A requests, from the train controller B, a range Remote.Y.B within which the train B does not reach. After the train controller B calculates a track resource range Self.Y.B required by itself based on self running needs, the train controller B authorizes a supplementary set of Self.Y.B to the train controller A.

In step A, the train controller B requests a corresponding resource Remote.Y.A from the train controller A based on the above same step.

In step A, after the train controller A and the train controller B separately receive a range within which the other party does not appear, the train controller A hands over the control token X(A,B) to the trackside resource controller, and the train controller B hands over the control token X(B,A) to the trackside resource controller.

In step B, the trackside resource controller can allocate an overlapped area Z to the two train controllers after obtaining the token X(A,B) of the train controller A and the token X(B,A) of the train controller B. In this case, the trackside resource controller authorizes the train A to run in an area Z.A, the trackside resource controller authorizes the train B to run in an area Z.B, and the area Z.A and the area Z.B have intersection.

In step B, a collision risk between the train A and the train B is prevented by the train controller A and the train controller B, and a collision risk between a remaining train and the train A or the train B is still prevented by the trackside resource controller.

In step B, the train runs within an authorized range Z.A of the trackside resource controller, and needs to run within an authorized range Remote.Y.B of the train controller B and a range Self.Y.A promised to another train controller.

In step B, when the train A runs within the range Z.A authorized by the trackside resource controller, if the range is beyond the authorized range Remote.Y.B of the train controller B, the train controller A needs to request a new authorized range from the train controller B.

In step B, the train controller B receives a track resource request from the train controller A. The train controller B determines whether to authorize a range requested by the train controller A based on self running needs. The train controller B sends the range that can be authorized to the train controller A to the train controller A.

In step B, the train can run within a running range newly authorized by the train controller B only after the train controller A receives the authorized running range.

In step B, if the train controller A expects to run to an area in which the train controller A promised the train controller B not to run, namely, Self Y. A does not include the area, the train controller A needs to reclaim, from the train controller B, the area that was previously promised. After receiving the request from the train controller A, the train controller B determines whether the area can be returned to the train controller A. The train controller B returns the range that can be returned to the train controller A to the train controller A. The train controller A allows the train to run in the area only after the train controller A determines that Self Y. A includes the area, otherwise the train controller A prohibits the train A from appearing in the area.

In step C, when the trackside resource controller learned that there is no intersection between the track resource Z.A authorized to the train A and the track resource Z.B authorized to the train B, the trackside resource controller returns a token X(A,B) to the train controller A and returns a token X(B,A) to the train controller B. After the trackside resource controller loses the control token X(A,B) or the control token X(B,A), the trackside resource controller no longer allocates, to the train controller A and the train controller B, a track resource Z.A and a track resource Z.B between which there is an intersection respectively.

In step C, the trackside resource controller requests the train controller A to return the control token V(B,A); and the trackside resource controller requests the train controller B to return the control token V(A,B).

In step C, the train controller A returns the control token V (B,A) to the trackside resource controller. After the trackside resource controller receives the returned control token V (B,A), the trackside resource controller returns the control token U(B,A) to the train controller B.

In step C, the train controller B returns a control token V(A,B) to the trackside resource controller. After the trackside resource controller receives the returned control token V(A,B), the trackside resource controller returns the control token U(A,B) to the train controller A.

### Specific examples

In the present invention, a problem of train collision is resolved through direct communication between train controllers, so that the efficiency of the use of track and train resources is improved while safety is ensured.

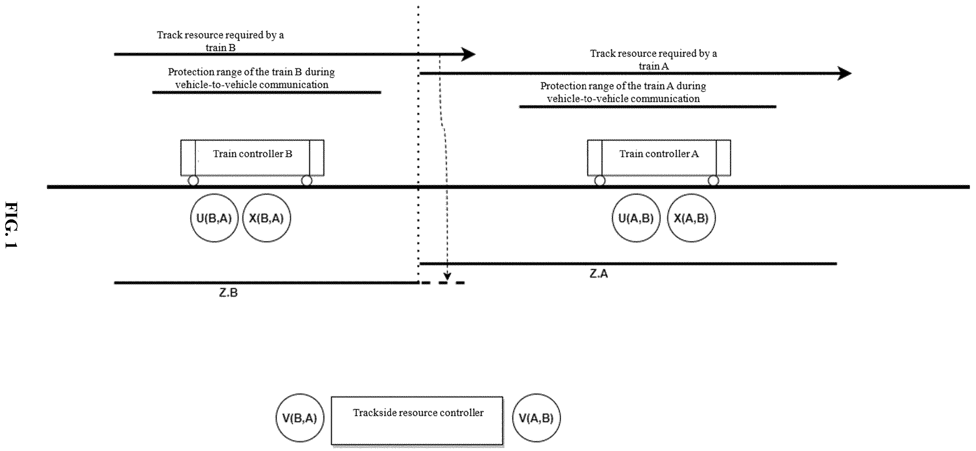

In step A, as shown in FIG. 1, the train controller B requests the required track resource from the trackside resource controller, but there is an overlap between the track resource and the track resource that the trackside resource controller has allocated to the train controller A.

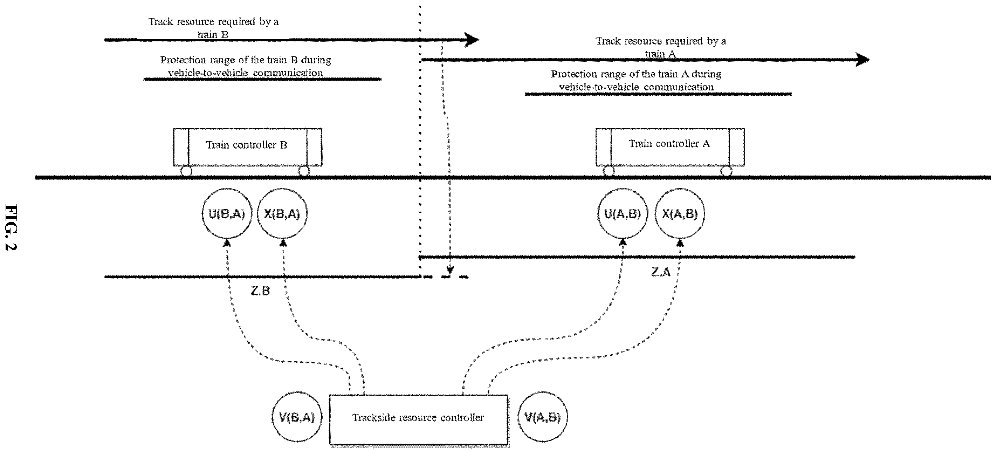

In step A, as shown in FIG. 2, the trackside resource controller learns that there is an overlap between the track resource requested by the train controller A and the track resource requested by the train controller B. Therefore, vehicle-to-vehicle communication between the two train controllers is triggered. To be specific, the trackside resource controller requests the control token U and the control token X to the train controller A and the train controller B respectively.

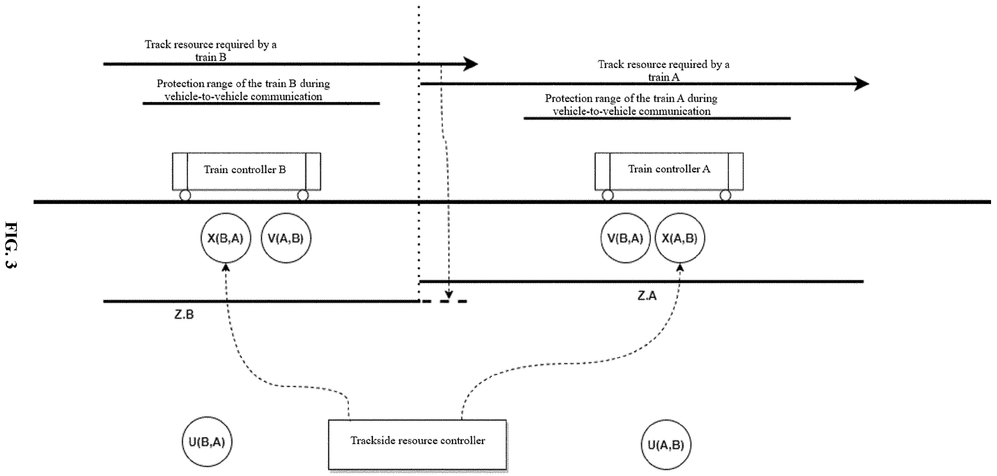

In step A, as shown in FIG. 3, the train controller A and the train controller B pass the control token U to the trackside resource controller, and the trackside resource controller authorizes the control token V to the train controller B after obtaining the token U of the train controller A. The trackside resource controller authorizes the control token V to the train controller A after obtaining the control token U passed by the train controller B.

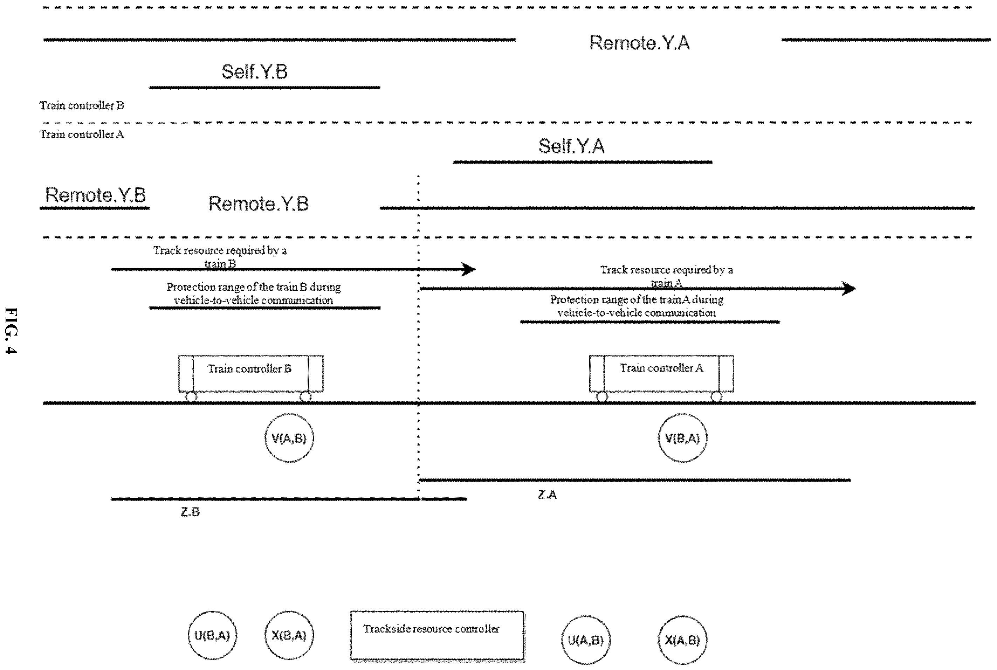

In step A, as shown in FIG. 4, the train controller A asks, after obtaining the control token V, the train controller B for a range Remote.Y.B within which the train A is allowed to run. The train controller B authorizes, after receiving the request from the train controller A, the train A to run in an area in which the train B does not appear. After obtaining the control token V authorized by the trackside resource controller, the train controller B requests a range Remote.Y.A to the train controller A within which the train B is allowed to run. The Remote.Y.A held by the train controller B and a Self.Y.A held by the train controller A are complementary. Similarly, the Remote.Y.B held by the train controller B and a Self.Y.B held by the train controller B are complementary. The train controller A hands over the token X to the trackside resource controller after obtaining the Remote.Y promised by the train controller B. The train controller B hands over the token X to the trackside resource controller after obtaining the Remote.Y promised by the train controller. Vehicle-to-vehicle communication between the train controller A and the train controller B has been established.

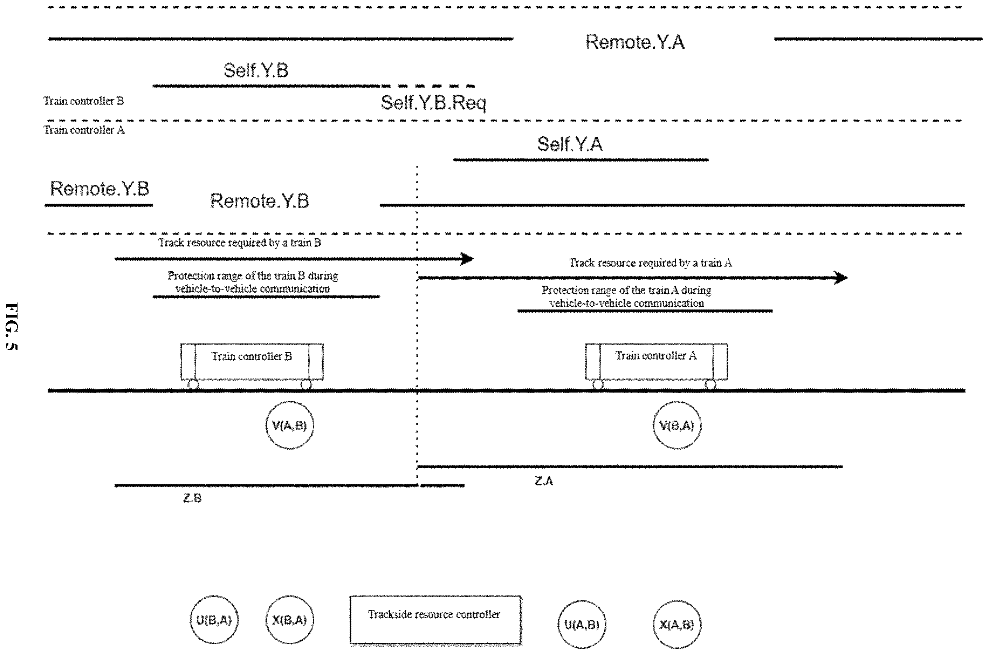

In step B, as shown in FIG. 5, the train controller A will control the train A to run only within the range of Self.Y.A and the range of Remote.Y.B, thus preventing the train A from colliding with the train B. Similarly, the train controller B will control the train B to run only within the range of Self.Y.B and the range of Remote.Y.A. In this way, collision between the train B and the train A is prevented. When the train B continues running forward, the train controller has requested Z.B from the trackside resource controller. However, in this case, the train controller B still needs to request Self.Y.B. Req from the train controller A. To be specific, the train controller B needs to run within an area that the train controller B promised the train controller A that the train controller B would not appear.

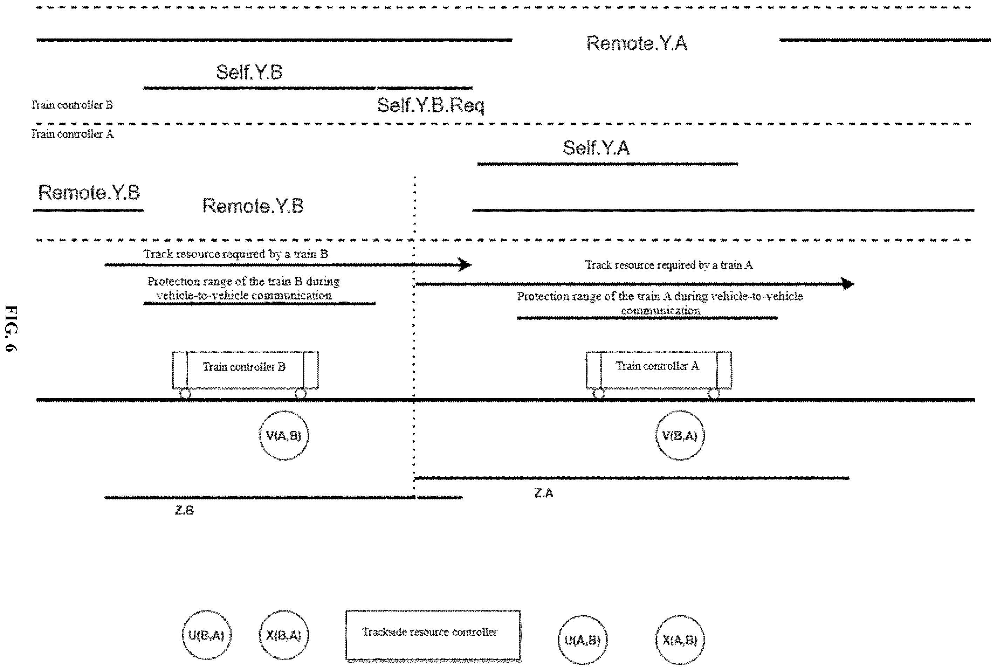

In step B, as shown in FIG. 6, after the train controller A receives the request from the train controller B, the train controller A determines whether return of the area to the train controller B endangers running of the train controller A. If the train controller A determines that the return of the area to the train controller B does not affect running of the train controller A, the train controller A authorizes the train B to run within the area.

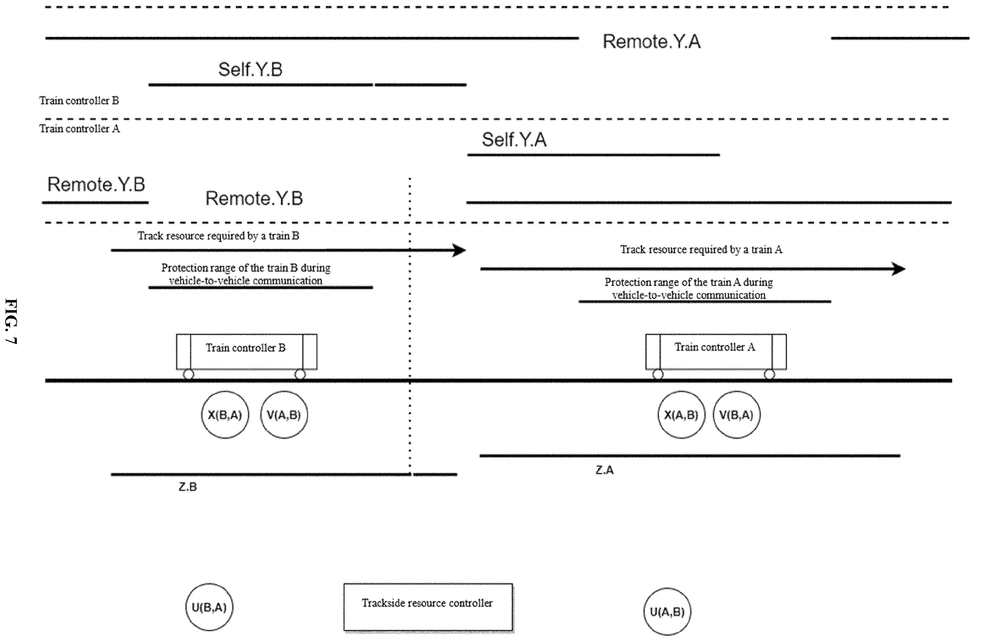

In step C, as shown in FIG. 7, when the trackside resource controller learned that there is no intersection between track resources respectively occupied and requested by two trains, the trackside resource controller revokes vehicle-to-vehicle communication. The trackside resource controller returns the control tokens to the train controller A and the train controller B respectively.

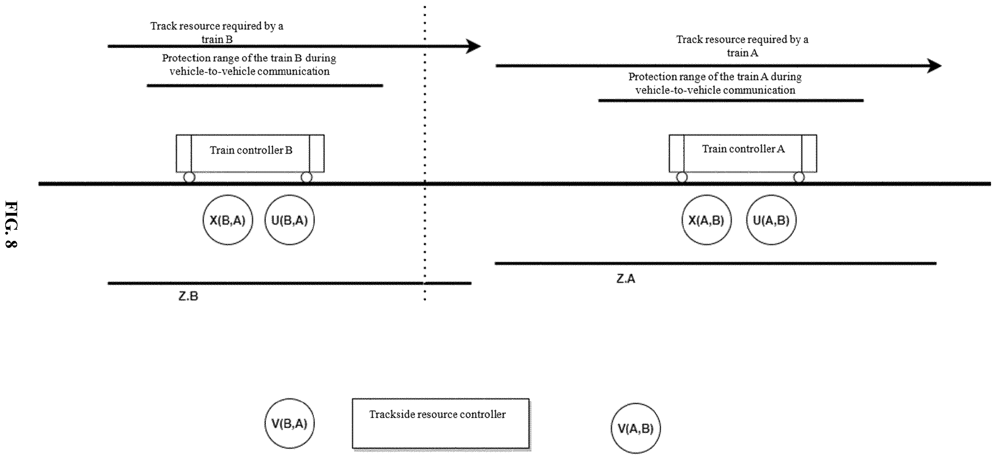

In step C, as shown in FIG. 8, After the train controller A and the train controller B determine that control tokens V can be returned to the trackside resource controller, the train controller A and the train controller B return control tokens V to the trackside resource controller. After the trackside resource controller obtains the control tokens V returned by the train controllers, the trackside resource controller returns control tokens U to corresponding train controllers respectively. In this case, the vehicle-to-vehicle communication is revoked successfully. Subsequent request and release of track resources are performed between the trackside resource controller and the train controller.

The above is an introduction to embodiments of the method, and the solutions of the present invention are further explained by embodiments of an electronic device and a storage medium.

The electronic device of the present invention includes a central processing unit (CPU) that can execute various appropriate actions and processes according to computer program instructions stored in a read-only memory (ROM) or loaded from a storage unit into a random access memory (RAM). In the RAM, various programs and data required for the operation of the device can also be stored. The CPU, the ROM, and the RAM are connected to each other via a bus. An input/output (I/O) interface is also connected to the bus.

A plurality of components in the device are connected to the I/O interface, including: input units, such as a keyboard and a mouse; output units, such as various types of displays and speakers; storage units, such as a disk and an optical disc; and communication units, such as a network card, a modem, and a wireless communication transceiver. The communication unit allows the device to exchange information/data with other devices through a computer network such as the Internet and/or various telecommunication networks.

The processing unit performs each of the methods and processes described above, such as the methods of the present invention. For example, in some embodiments, the method in the present invention may be implemented as computer software programs that are tangibly included in a machine-readable medium, such as a storage unit. In some embodiments, some or all of the computer programs may be loaded and/or installed onto the device via the ROM and/or communication unit. When the computer programs are loaded into the RAM and executed by the CPU, one or more of the steps of the method in the present invention described above can be performed. Alternatively, in other embodiments, the CPU may be configured to perform the method in the present invention in any other proper manner (for example, with the help of firmware).

Functions described above in the specification can be performed, at least in part, by one or more hardware logic components. For example, hardware logic components that can be used as examples include, unlimitedly, a field-programmable gate array (FPGA), an application-specific integrated circuit (ASIC), an application-specific standard product (ASSP), a system-on-chip (SOC), a complex programmable logic device (CPLD), and the like.

Program code for implementing the method in the present invention may be written in any combination of one or more programming languages. The program code may be provided to processors or controllers of general-purpose computers, specialized computers, or other programmable data processing devices, so that when the program code is executed by the processors or controllers, functions/operations specified in flowcharts and/or block diagrams are implemented. The program code can be executed entirely on a machine, partially on the machine, partially on the machine and partially on a remote machine as a separate software package, or entirely on the remote machine or server.

In the context of the present invention, a machine-readable medium may be a tangible medium that may contain or store programs for use by or in combination with an instruction execution system, apparatus, or device. The machine-readable medium may be either a machine-readable signal medium or machine-readable storage medium. The machine-readable medium may include, but is not limited to, an electronic, magnetic, optical, electromagnetic, infrared, or semiconductor system, apparatus, or device, or any proper combination thereof. A more specific example of the machine-readable storage medium includes an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any proper combination thereof.

The foregoing descriptions are merely implementations of the present invention, but are not intended to limit the protection scope of the present invention. Any equivalent variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A train anti-collision method based on vehicle-to-vehicle communication, comprising the following steps:
step A: initiating, by a trackside resource controller, vehicle-to-vehicle communication based on requirements for track resource overlapping and anti-deadlock requested by different train controllers, and establishing direct vehicle-to-vehicle communication between the different train controllers;
step B: directly negotiating track resources between different trains; and
step C: revoking, by the trackside resource controller, the vehicle-to-vehicle communication based on a current train running state and a signal system running state, and performing request and release of the track resources between the train controller and the trackside resource controller.

2. The train anti-collision method based on vehicle-to-vehicle communication according to claim 1, wherein in step A, the train controller requests a track resource Z from the trackside resource controller, the trackside resource controller allocates the track resource Z to the train controller, and the train controller allows a train to run only within the requested track resource Z; and the trackside resource controller allocates, to the train controller, an area Z that does not overlap with another train controller.

3. The train anti-collision method based on vehicle-to-vehicle communication according to claim 1, wherein in step A, when the trackside resource controller learns that a track resource Z.A requested by a train controller A partially overlaps with a track resource Z.B requested by a train controller B, the trackside resource controller respectively requests control tokens X and control tokens U to the train controller A and the train controller B simultaneously.

4. The train anti-collision method based on vehicle-to-vehicle communication according to claim 3, wherein when the train controller A receives a request for a token U(A,B) from the trackside resource controller, the train controller A hands over the token U(A,B) to the trackside resource controller; and
when the train controller B receives a request for a token U(B,A) from the trackside resource controller, the train controller B hands over the token U(B,A) to the trackside resource controller.

5. The train anti-collision method based on vehicle-to-vehicle communication according to claim 4, wherein when the trackside resource controller receives the control token U(A,B) from the train controller A, the trackside resource controller hands over a control token V(A,B) to the train controller B; and when the train controller B owns the control token V(A,B), the train controller B trusts a promise made to the train controller B by the train controller A.

6. The train anti-collision method based on vehicle-to-vehicle communication according to claim 4, wherein when the trackside resource controller receives the control token U(B,A) from the train controller B, the trackside resource controller hands over a control token V(B,A) to the train controller A; and when the train controller A owns the control token V(B,A), the train controller A trusts a promise made to the train controller A by the train controller B.

7. The train anti-collision method based on vehicle-to-vehicle communication according to claim 1, wherein in step A, the train controller A requests, from the train controller B, a range Remote.Y.B within which the train B does not reach; after the train controller B calculates a track resource range Self.Y.B required by itself based on self running needs, the train controller B authorizes a supplementary set of Self.Y.B to the train controller A;
the train controller B requests, from the train controller A, a range Remote.Y.A within which the train A does not reach; and after the train controller A calculates a track resource range Self.Y.A required by itself based on self running needs, the train controller A authorizes a supplementary set of Self.Y.A to the train controller B.

8. The train anti-collision method based on vehicle-to-vehicle communication according to claim 7, wherein after the train controller A and the train controller B separately receive a range within which the other party does not appear, the train controller A hands over the control token X(A,B) to the trackside resource controller, and the train controller B hands over the control token X(B,A) to the trackside resource controller.

9. The train anti-collision method based on vehicle-to-vehicle communication according to claim 3, wherein in step B, the trackside resource controller allocates an overlapped area Z to the two train controllers after obtaining the token X(A,B) of the train controller A and the token X(B,A) of the train controller B, in this case, the trackside resource controller authorizes the train A to run in a track resource area Z.A, the trackside resource controller authorizes the train B to run in a track source area Z.B, and the track resource area Z.A and the track resource area Z.B have intersection.

10. The train anti-collision method based on vehicle-to-vehicle communication according to claim 1, wherein in step B, a collision risk between the train A and the train B is prevented by the train controller A and the train controller B, and a collision risk between a remaining train and the train A or the train B is still prevented by the trackside resource controller.

11. The train anti-collision method based on vehicle-to-vehicle communication according to claim 7, wherein in step B, the train A runs within an authorized range Z.A of the trackside resource controller, and needs to run within an authorized range Remote.YB of the train controller B and a range Self.Y.A promised to another train controller; and
when the train A runs within the range Z.A authorized by the trackside resource controller, if the range is beyond the authorized range Remote.Y.B of the train controller B, the train controller A needs to request a new authorized range from the train controller B.

12. The train anti-collision method based on vehicle-to-vehicle communication according to claim 1, wherein in step B, the train controller B receives a track resource request from the train controller A, the train controller B determines, based on self running needs, whether to authorize a range requested by the train controller A, and the train controller B sends the range that can be authorized to the train controller A to the train controller A; and
a train can run within a running range newly authorized by the train controller B only after the train controller A receives the running range.

13. The train anti-collision method based on vehicle-to-vehicle communication according to claim 7, wherein in step B, if the train controller A expects to run to an area in which the train controller A promised the train controller B not to run, namely, Self Y.A does not comprise the area, the train controller A needs to reclaim the promised area from the train controller B; and
after the train controller B receives the request from the train controller A, the train controller B determines whether the area can be returned to the train controller A, and the train controller B returns a range that can be returned to the train controller A to the train controller A, and the train controller A allows the train to run in the area only after the train controller A determines that Self Y.A comprises the area, otherwise the train controller A prohibits the train A from appearing in the area.

14. The train anti-collision method based on vehicle-to-vehicle communication according to claim 3, wherein in step C, when the trackside resource controller learned that there is no intersection between the track resource Z.A authorized to the train A and the track resource Z.B authorized to the train B, the trackside resource controller returns a token X(A,B) to the train controller A and returns a token X(B,A) to the train controller B, and after the trackside resource controller loses the control token X(A,B) or the control token X(B,A), the trackside resource controller no longer allocates, to the train controller A and the train controller B, a track resource Z.A and a track resource Z.B between which there is an intersection respectively.

15. The train anti-collision method based on vehicle-to-vehicle communication according to claim 4, wherein in step C, the trackside resource controller requests the train controller A to return the control token V(B,A); and the trackside resource controller requests the train controller B to return the control token V(A,B).

16. The train anti-collision method based on vehicle-to-vehicle communication according to claim 4, wherein in step C, the train controller A returns a control token V(B,A) to the trackside resource controller, and after the trackside resource controller receives the returned control token V(B,A), the trackside resource controller returns the control token U(B,A) to the train controller B; and
the train controller B returns a control token V(A,B) to the trackside resource controller, and after the trackside resource controller receives the returned control token V(A,B), the trackside resource controller returns the control token U(A,B) to the train controller A.

17. An electronic device, comprising a processor and a memory on which a computer program is stored, wherein when the processor executes the program, the method according to any one of claims 1 to 16 is implemented.

18. A computer-readable storage medium on which a computer program is stored, wherein when the program is executed by a processor, the method according to any one of claims 1 to 16 is implemented.
